# FASCICULE DE BREVET EUROPEEN

(11) **EP 2 712 765 B1**
(45) Date de publication et mention de la délivrance du brevet: **23.12.2015**
(21) Numéro de dépôt: 13185346.7
(22) Date de dépôt: 20.09.2013
(51) Int. Cl.: B60Q 3/02, B60Q 3/00

(54) **Dispositif d'éclairage avec un module source de lumière à deux faces émettrices**
Beleuchtungsvorrichtung mit einem Lichtquellenmodul mit zwei Lichtausstrahlungsseiten
Lighting device with a light-source module having two emitting surfaces

(30) Priorité: 26.09.2012 FR 1259021
(43) Date de publication de la demande: 02.04.2014
(73) Titulaire: VALEO VISION, 93012 Bobigny Cedex (FR)
(72) Inventeur: Dubosc, Christophe, 93250 VILLEMOMBLE (FR)

(56) Documents cités:
- EP-A2- 2 489 550
- WO-A1-2012/035258
- DE-A1-102007 013 927
- DE-U1- 20 319 731
- US-A1- 2011 305 032
- US-A1- 2012 091 923

## Description

La présente invention se rapporte au domaine des éclairages intérieur dans des espaces tels que des véhicules. En particulier, la présente invention porte sur un dispositif d'éclairage intérieur pour éclairer un objet ou un individu situé dans l'habitacle d'un véhicule.

De nos jours, les dispositifs d'éclairage intérieurs sont disposés dans les habitacles de nombreux moyens de transports tels que des aéronefs, des trains ou encore des navires mais également des véhicules automobiles (voitures, camions, etc.).

Ces dispositifs correspondent, par exemple, à des éclairages individuels tels que des liseuses, des plafonniers ou encore des pare-soleils équipant des véhicules.

De tels dispositifs d'éclairages sont généralement réalisés à partir de source lumineuse correspondant à une ampoule à incandescence. Cette ampoule est comprise dans un ensemble optique apte à générer un faisceau lumineux, à partir d'un module optique ou de plusieurs modules optiques.

De tels dispositifs requièrent un espace important dans les habitacles de véhicules, pour finalement une utilisation limitée. En effet, de tels dispositifs d'éclairage sont agencés et configurés généralement que pour une fonction unique : liseuse ou encore comme source lumineuse coopérant avec un miroir de courtoisie, ce qui implique que plusieurs dispositifs doivent être utilisés pour différentes fonctions. Ceci engendre beaucoup d'encombrement.

Un dispositif d'éclairage selon le préambule des revendications 1 et 11 est connu du document WO 2012/035258.

La présente invention vise à résoudre ces problèmes résultant des inconvénients de l'état de l'art.

Par conséquent un des buts de l'invention est de résoudre le problème lié à l'amélioration de dispositifs d'éclairage intérieur de sorte à ce qu'ils puissent assurer différentes fonctions d'éclairage tout en présentant un faible encombrement.

Ce but est atteint par le fait que l'invention propose un dispositif d'éclairage intérieur comportant un module source lumineuse, de faible épaisseur, transparent ou translucide, et surfacique, apte à coopérer avec au moins un réflecteur de sorte que les faces recto et verso du dispositif constituent des sources de lumière distinctes prévues pour des utilisations différentes.

Plus particulièrement, un objet de l'invention est un dispositif d'éclairage intérieur, destiné à être utilisé dans un véhicule, selon les caractéristiques des revendications 1 ou 11.

Ce dispositif d'éclairage intérieur peut en outre comporter l'une ou plusieurs des caractéristiques suivantes, prises seules ou en combinaison :
- la première surface réfléchissante du réflecteur de lumière a des dimensions inférieures à celles de la première face émettrice du module source de lumière avec laquelle ladite première surface réfléchissante est en regard ; cette première surface réfléchissante peut notamment être obtenue par dépôt d'un matériau réfléchissant sur le matériau du module source de lumière.
- le réflecteur de lumière et le module source de lumière sont agencés de sorte qu'au moins certains rayons provenant de cette première face émettrice traversent le module source de lumière en direction de la deuxième face qui lui est opposée, après réflexion sur ladite première surface réfléchissante ; ceci a l'avantage de renforcer l'intensité lumineuse du faisceau sortant par la deuxième face émettrice.
- les faces émettrices du module source de lumière sont sensiblement parallèles.
- le module source de lumière est surfacique et transparent.
- le dispositif d'éclairage intérieur comprend une enveloppe comportant le module source de lumière et les réflecteurs de lumière ; cette enveloppe permet d'agencer le dispositif en un module, notamment apte à être monté dans un habitacle de véhicule.
- l'enveloppe comporte également des câbles d'alimentation du module source de lumière.
- l'enveloppe comprend deux parties séparables ; ce mode de réalisation est plus simple à fabriquer et à assembler.
- l'enveloppe comprend des moyens de fixation.
- les moyens de fixation sont agencés de manière à ce que le dispositif d'éclairage puisse pivoter autour d'un axe passant par ces moyens de fixation ; on peut ainsi orienter l'éclairage de l'habitacle, ce qui est notamment avantageux pour utiliser une fonction de liseuse.
- les moyens de fixation ont une forme destinée à être reçue dans une forme complémentaire, notamment d'un élément du véhicule, de manière à permettre audit dispositif de pivoter autour dudit axe ; ce mode de réalisation est plus simple à fabriquer et à assembler.
- le dispositif d'éclairage est agencé pour pivoter autour dudit axe permettant de présenter une face recto du dispositif selon une position et une face verso du dispositif selon une autre position ; il est ainsi possible de passer d'une fonction réalisée par la face recto, par exemple un miroir de courtoisie éclairé, à une autre fonction réalisé par la face verso, par exemple une liseuse.
- les moyens de fixation sont situés de part et d'autre du dispositif de manière à ce que l'axe de rotation passe entre les faces recto et verso du dispositif d'éclairage ; cela rend la réalisation et l'intégration plus simple.
- le module source de lumière est une diode électroluminescente organique.
- le réflecteur de lumière est agencé en regard de la face émettrice du module source de lumière qui est la moins intense.
- le dispositif d'éclairage comprend une diode électroluminescente organique, cette dernière comprenant :
   - au moins une couche organique émettrice de lumière lorsqu'elle est soumise à une tension électrique, cette couche formant ledit module source de lumière,
   - deux électrodes de part et d'autre de ladite couche organique émettrice de lumière, l'une des électrodes étant transparente et l'autre réfléchissante, l'électrode réfléchissante formant le réflecteur.
- le réflecteur de lumière comporte d'un côté ladite première face réfléchissante et de l'autre côté une deuxième face réfléchissante ; selon un mode de réalisation la deuxième surface réfléchissante est un miroir de courtoisie.
- la surface émettrice est adaptée pour émettre une lumière permettant la lecture.
- le dispositif d'éclairage est, dans sa forme, sensiblement similaire à un pare-soleil destiné à être monté à l'intérieur d'un véhicule.
- le dispositif d'éclairage est destiné à être monté dans le dossier d'un véhicule ou sur un tableau de bord.

Un autre objet de l'invention est un véhicule comprenant un dispositif d'éclairage selon l'invention.

D'autres avantages et caractéristiques de l'invention apparaîtront mieux à la lecture de la description d'un mode de réalisation préféré qui va suivre, en référence aux figures ci-dessous, réalisé à titre d'exemple indicatif et non limitatif :
- la figure 1 représente une première face d'émission de lumière du dispositif d'éclairage selon un mode de réalisation de l'invention ;
- les figures 2 et illustrent une deuxième face d'émission de lumière du dispositif d'éclairage selon un mode de réalisation de l'invention ;
- la figure 3 illustre le dispositif d'éclairage avec son câblage d'alimentation électrique selon un mode de réalisation de l'invention ;
- les figures 4A, 4B représentent une section transversale du dispositif d'éclairage selon un mode de réalisation de l'invention ;
- la figure 4C représente une section transversale d'un dispositif d'éclairage
- la figure 4D représente une section transversale d'un dispositif d'éclairage
- les figures 5A et 5B illustrent le montage du dispositif d'éclairage sur un support selon un mode de réalisation de l'invention ;
- les figures 6A et 6B représentent des modes de réalisation de diodes électroluminescentes organiques ;
- la figure 7 illustre un bord d'un guide de lumière et
- la figure 8 représente une vue d'une zone d'un guide de lumière comportant des foyers réfléchissants.

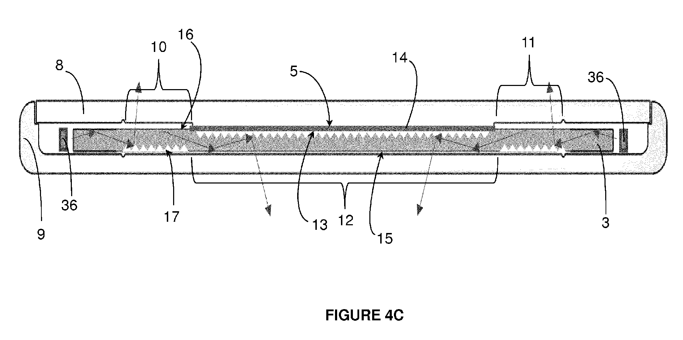

Les exemples de réalisation selon les figures 4C, 4D, 7 et 8 ne font cependant pas partie de la présente invention.

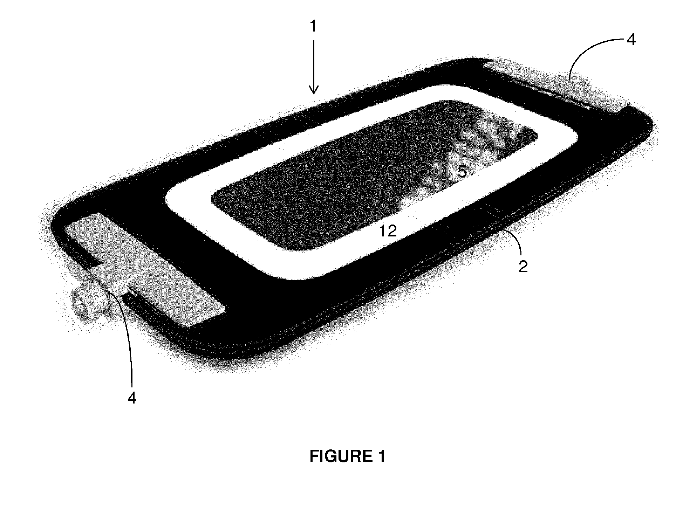

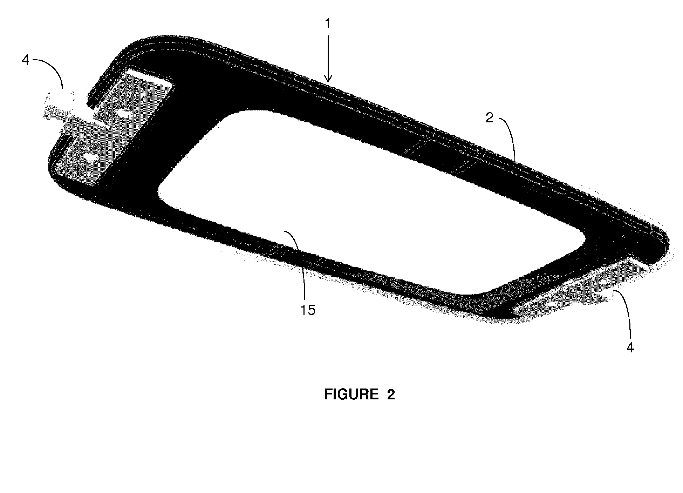

J Ainsi que l'illustrent les figures 1, 2, 5A et 5B, l'invention se rapporte de manière non exhaustive à un dispositif d'éclairage intérieur 1 comprenant à son verso une surface émettrice 15 entièrement dédiée à une fonction de liseuse, et à son recto une surface émettrice 16 partiellement recouverte d'un réflecteur 14 de lumière dont une des surfaces réfléchissantes 5 sert de miroir de courtoisie. Dans la présente demande un miroir de courtoisie est un miroir apte à être utilisé par des personnes, notamment les usagers d'un véhicule, pour y observer leur image.

Ce dispositif d'éclairage 1 peut par exemple correspondre à un pare-soleil ou être agencé derrière un siège d'un véhicule en assurant deux fonctions d'éclairage : une par face recto/verso du dispositif 1. Ce dispositif d'éclairage 1 peut être dans sa forme sensiblement similaire à un pare-soleil monté à l'intérieur d'un véhicule automobile.

Plus, précisément ce dispositif d'éclairage 1 comprend :
- un module source de lumière 3 ;
- au moins un réflecteur 14 ,37, 38 de lumière.

Ce module source de lumière 3 est surfacique, transparent ou translucide et peut être lambertienne ou non. Les faces émettrices 16,15 du module source de lumière sont sensiblement parallèles et/ou planes.

Ces éléments surfaciques émettant de la lumière sont des diodes électroluminescentes organiques (acronyme OLED pour Organic Light-Emitting Diode). Cet élément est un composant électronique apte à produire de la lumière dont la structure correspond à une superposition de plusieurs couches semiconductrices organiques entre deux électrodes dont l'une, au moins, est transparente.

La diode électroluminescente organique de ce dispositif d'éclairage 1 peut être conçue selon des modes de réalisation différents.

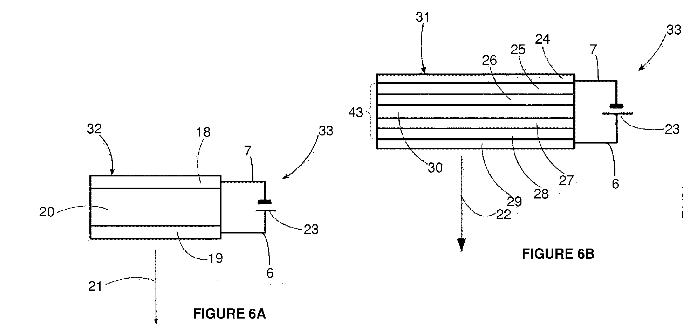

En effet dans un premier mode 33 représenté à la figure 6A, la diode électroluminescente organique 32 comprend plusieurs couches : une cathode 18, une anode 19 et une couche organique 20. Lorsque la couche organique est soumise à une tension électrique, elle émet un rayonnement lumineux 21 se propageant au travers de l'anode 19 qui est transparente relativement à ce rayonnement.

Préférentiellement, l'aire émettrice de l'élément surfacique de lumière est supérieure à 1 cm².

La diode électroluminescente organique 32 de ce module source de lumière 3 peut être du type conformable. Par exemple, elle peut être réalisée par un film qu'il est possible de déposer sur une surface, notamment sur une surface gauche. Alternativement, elle peut être réalisée grâce à une technique d'impression des différentes couches, notamment par une technique d'impression sur une surface gauche.

Dans un deuxième mode de réalisation 60, illustré en figure 6B, la diode électroluminescente organique 31 comprend plusieurs couches : une cathode 24, une anode 29 et une couche organique 43. Lorsque la couche organique est soumise à une tension électrique, elle émet un rayonnement lumineux 22 se propageant au travers de l'anode 29 qui est transparente relativement à ce rayonnement. La couche organique peut éventuellement comprendre différentes strates 25 à 28 et 30 en matériaux organiques différents. De préférence, on utilise des diodes électroluminescentes organiques comprenant des strates supplémentaires. En plus de la strate 30 émettrice de lumière, la couche organique comprend une strate 25 favorisant le transport des électrons jusqu'à la strate émettrice 30 et une strate 28 favorisant le transport des trous jusqu'à la strate émettrice 30. La couche organique peut aussi comprendre une strate 26 bloquant les trous provenant des strates inférieures 30,27,28 et une strate 27 bloquant les électrons provenant des strates supérieures 25,26,30. L'ensemble de ces strates constitue une microcavité dont l'épaisseur est ajustée pour créer une résonance optique. Ainsi, on réalise des réflecteurs interférentiels sélectifs qui constituent des cavités résonnantes. Par exemple, on peut utiliser une diode électroluminescente organique du type décrit dans le document FR 2 926 677.

Dans le cas où le module source de lumière est réalisé par plusieurs éléments surfaciques émettant de la lumière, il est possible de réaliser plusieurs zones pouvant être allumées indépendamment les unes des autres.

Avantageusement, le module source de lumière 3 peut émettre de la lumière de couleurs différentes.

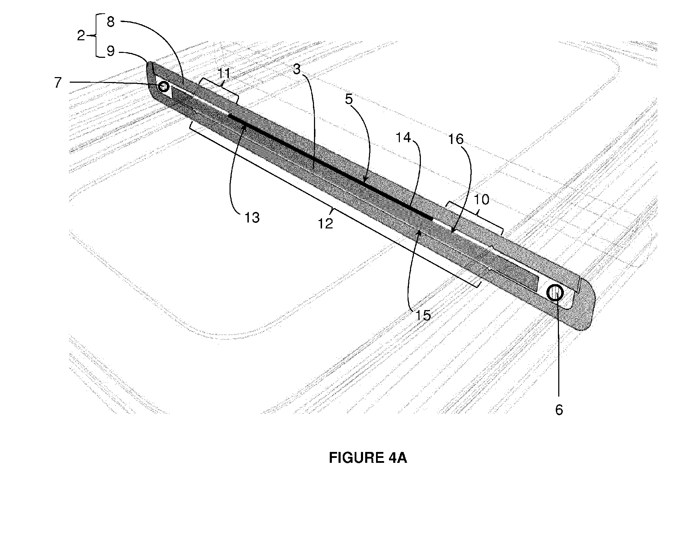

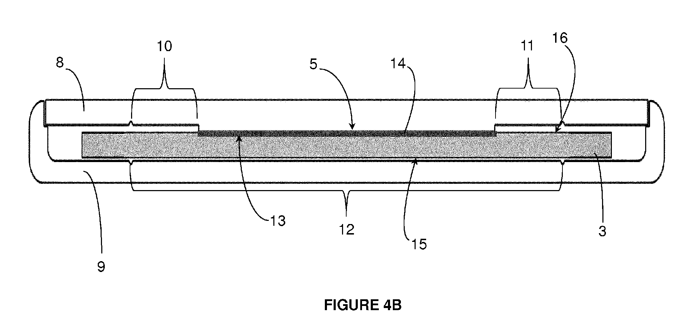

Les figures 4A et 4B illustrent un dispositif d'éclairage intérieur 1 selon un mode de réalisation de l'invention, dans lequel le module source de lumière 3 est une source surfacique de lumière tel qu'une OLED avec d'un côté une première face émettrice 16 et de l'autre côté une deuxième face émettrice 15.

Ainsi que nous l'avons vu précédemment un module de source de lumière 3 peut également se rapporter à un guide de lumière surfacique coopérant avec des sources de lumière. Ces sources de lumière 36 peuvent se rapporter par exemple à des diodes électroluminescentes, à des extrémités de fibres optiques, à des micro-lampes à filament ou à des néons.

En effet, ce guide de lumière surfacique est réalisé en matière plastique transparente, en PMMA (poly méthacrylate de méthyle), d'une épaisseur comprise entre 2 et 3 mm, notamment afin de faciliter sa fabrication par moulage par injection. Sa couleur peut être cristal (incolore), mais d'autre couleur peuvent être envisagée tant qu'elle reste compatible avec les fonctions attendues du dispositif d'éclairage 1. Sur au moins l'un de ses bords sont disposées des sources 36, qui envoient de la lumière dans l'épaisseur de ce guide de lumière, où elle se trouve piégée grâce à la réflexion totale interne entre deux faces 16,15 de de ce guide de lumière. Les deux faces 16,15 de ce guide de lumière sont parallèles ou sensiblement parallèles entre elles. Ces deux faces 16,15 sont également celles du module source de lumière 3.

Selon un mode de réalisation, non représenté, le dispositif d'éclairage selon l'invention comprend un module source de lumière qui est une couche organique émettrice de lumière d'une diode électroluminescente organique. Cette dernière peut être une diode électroluminescente organique telle que décrit ci-dessus, mais dont la cathode 18, 24 n'est pas transparente mais réfléchissante, seule l'anode 19, 29 étant transparente. L'OLED ne présente ainsi pas deux faces émettrices de lumière mais une seule au niveau de l'anode 19, 29. Dans ce mode de réalisation, c'est la couche organique émettrice de lumière 20, 43, qui forme le module de lumière et la cathode 18, 24 qui forme le réflecteur. Ainsi l'OLED dans ce mode de réalisation comprend le module source de lumière et le réflecteur de manière intégrée.

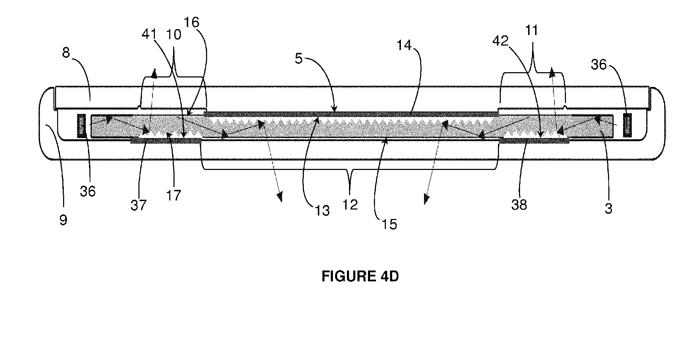

Les figures 4C et 4D illustrent des exemples de réalisation ne faisant pas partie de la présente invention, dans lesquels le module source de lumière 3 est un guide de lumière comme décrit ci-dessus et ci-après.

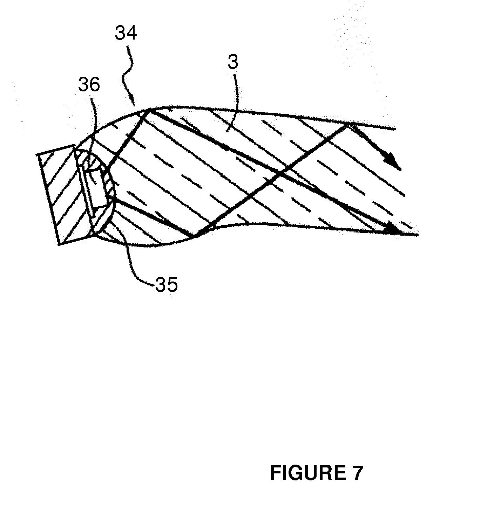

Dans l'exemple non limitatif de la figure 7, la forme des bords de ce guide de lumière peut être modifiée pour exploiter au maximum le flux lumineux émis par les diodes. A cette figure 7, on voit en effet une zone active 34 du guide de lumière qui présente un évidemment, une cavité 35 en périphérie. Cette cavité a approximativement la forme d'une portion de sphère, et accueille une tête de diode 36. Cette cavité 35 est destinée à loger une diode 36. Les dimensions/formes respectives des cavités 35 et des têtes de diode 36 sont de préférence complémentaires, avec suffisamment de jeu pour que les diodes 36 puissent être facilement logées dans les cavités 35. Par ailleurs, on prévoit un renflement du guide de lumière sur ce pourtour actif, venant entourer les cavités 35 aux bords. La combinaison des cavités 35 et du renflement permet de récupérer toute ou quasiment toute l'énergie lumineuse des diodes 36 sur un cône émissif qui peut atteindre 180 degrés. A cette figure 7 est représenté deux trajets de deux rayons émis par une des diodes 36 : on voit qu'ils cheminent dans l'épaisseur du guide de lumière par réflexions successives sur les faces du guide de lumière. Comme détaillé aux figures 4C et 4D, ces réflexions successives sont interrompues quand les rayons rencontrent des foyers réfléchissants 17 créés à la surface des deux faces 15,16 du guide de lumière. Ces rayons qui se trouvent au voisinage de la face 16,15 ainsi modifiée (les rayons rasants) vont diffuser en direction des ouvertures 10,11,12 du dispositif d'éclairage 1 (symbolisés par les flèches).

Ces foyers réfléchissants 17 se rapportent à des motifs qui se trouvent sur la surface polie optique du guide de lumière. Chaque foyer 17 se comporte alors comme une source optique secondaire. On peut ensuite avoir toutes sortes de répartition de foyers en fonction de l'effet recherché. Ces répartitions sont effectuées essentiellement dans des zones des faces 15,16 du guide de lumière qui sont opposées aux ouvertures 10 à 12 du dispositif d'éclairage 1. Les figures 4C et 4D donnent ainsi des exemples de répartition, ces représentations n'étant pas à l'échelle pour être plus claires. Les dimensions de ces creux sont de surface apparente de 0.1 à 1 ou 2mm. Ils ont des profondeurs variables de quelques centièmes de millimètres à un millimètre. Leur forme peut être évolutive, notamment de ronde à rectangulaire. Leur état de surface peut être poli optique.

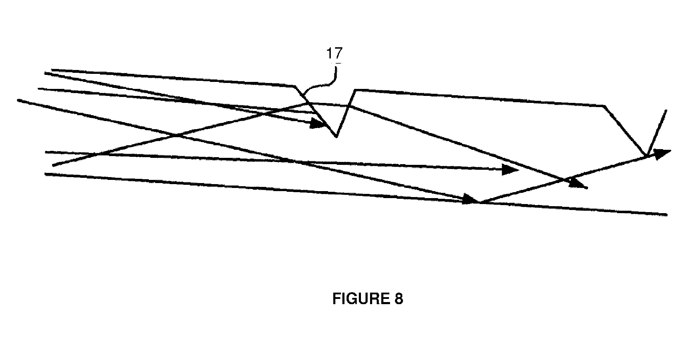

A la figure 8, est représenté le trajet des rayons frappant ces foyers 17 (par exemple constitués de motifs similaires aux motifs diffusants, mais aux parois lisses, polies, traitées pour être réfléchissantes) est symbolisé par les flèches : au moins une partie des rayons (selon leur angle d'incidence) va partir hors du guide de lumière, notamment au travers des ouvertures 10 à 12 aménagées dans le dispositif d'éclairage : ce ou ces foyers peuvent être disposés dans une zone spécifique pour concentrer spatialement la lumière ainsi que l'illustre ces figures 4C et 4D.

On notera que l'agencement particulier des diodes au niveau des cavités des bords de ce guide de lumière permet de collecter le flux émis par les diodes 36 de sorte à assurer la répartition spatiale dans l'épaisseur du guide de lumière.

Lorsque, le module source de lumière 3 selon l'invention est au moins un élément surfacique émettant de la lumière, formé par une diode électroluminescente organique, ses dimensions peuvent être les suivantes :
- une épaisseur entre 1 et 3 mm ;
- une longueur entre 120 et 160 mm, et
- une largeur entre 60 et 120 mm.

Lorsque, le module source de lumière 3 se rapporte à guide de lumière surfacique ses dimensions peuvent être les suivantes :
- une épaisseur entre 2 et 5 mm ;
- une longueur entre 120 et 160 mm, et
- une largeur entre 60 et 120 mm.

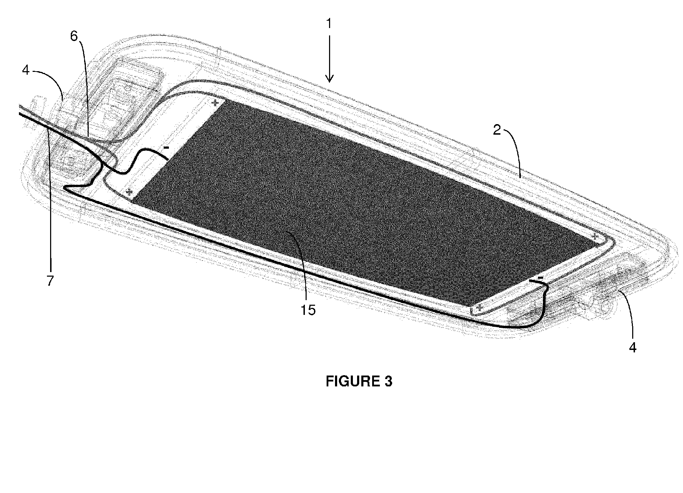

Les figures 3 et 4A représentent le circuit d'alimentation relié au module source de lumière 3 du dispositif d'éclairage 1. L'extrémité des câbles 6,7 de ce circuit d'alimentation est connectée à un générateur 61,71 de tension électrique. L'extrémité des câbles 6 étant connectée au pôle positif du générateur, et celle des câbles 7 au pôle négatif du générateur 71,61.

Selon une réalisation de l'invention, l'alimentation du dispositif est activée lorsqu'il est manipulé. L'interrupteur peut être compris dans les moyens de fixation du dispositif.

Dans le mode de réalisation de l'invention représenté en figure 4A à 4B, le dispositif comprend un unique réflecteur 14 de lumière. Les deux surfaces recto 5 et verso 13 de ce réflecteur 14 de lumière sont réfléchissantes. En effet, la surface dite recto 5 a pour fonction d'être un miroir de courtoisie dans le dispositif d'éclairage 1, et la surface dite verso 13 a pour fonction de réfléchir au moins certains rayons provenant d'une face émettrice 16 du module source de lumière 3 en direction de la face émettrice opposée 15 en traversant ainsi ce module source de lumière 3. Ce réflecteur 14 de lumière recouvre partiellement la face émettrice 16 au regard de laquelle il est agencé car ses surfaces réfléchissantes 13,5 ont des dimensions inférieures à cette face émettrice 16 du module source de lumière 3.

Le module source de lumière 3 est transparent (ou translucide). Lorsque ce module 3 se rapporte à au moins un élément surfacique émettant de la lumière, formé par une diode électroluminescente organique, le réflecteur de lumière 14 est agencé en regard de la face émettrice du module source de lumière qui est la moins intense afin d'augmenter l'intensité lumineuse de la face émettrice la plus intense. Ainsi l'intensité lumineuse de cette face émettrice la plus intense de ce module source de lumière 3 est alors augmentée.

Ce réflecteur de lumière 14 est agencé sur le module source de lumière 3 par application d'un dépôt métallique ou collage d'un élément réfléchissant.

Dans l'exemple de réalisation illustré à la figure 4D, d'autres réflecteurs de lumière 37,38 sont agencés dans le dispositif d'éclairage 1. Dans ce dispositif d'éclairage intérieur 1, les réflecteurs de lumière 14, 37, 38 sont positionnés en regard de chacune des deux faces émettrices de la source de lumière respectivement pour les réflecteurs de lumière 37 et 38 la face émettrice 15 et pour le réflecteur de lumière 14 la face émettrice 16. Plus particulièrement, chacun de ces trois réflecteurs de lumière 14, 37, 38 est situé de sorte que leur surface réfléchissante respectivement 13, 41, 42 soit agencée en regard des zones de la surface des faces émettrices, du module source de lumière, où sont formés des foyers réfléchissants 17. Ainsi, comme l'illustre les flèches relatives au trajet suivi par les rayons lumineux émis par les diodes 36 coopérant avec le guide de lumière 3, ces rayons sont partiellement réfléchis par chacun de ces réflecteurs de lumière 14,37,38 vers les ouvertures respectives 12,10,11 du dispositif d'éclairage 1. L'avantage procuré par l'agencement de ces réflecteurs de lumière 14,37,38 dans ce dispositif d'éclairage est d'augmenter l'intensité lumineuse de chacune des faces 15,16 de ce dispositif d'éclairage 1. Ces réflecteurs de lumière 14,37,38 sont agencés par rapport au module source de lumière selon les techniques exposées précédemment. On remarquera ici que les dimensions d'une surface réfléchissante 13,41,42 de ces réflecteurs de lumière sont sensiblement similaires à celles de la surface des zones comportant les foyers réfléchissants 17.

Dans l'optique de renforcer la solidité de ce dispositif d'éclairage 1, le module source de lumière 3, le ou les réflecteurs de lumière 14,37,38 (en fonction du mode de réalisation), le câblage électrique 6,7 peuvent être agencés dans une enveloppe 2 en un matériau isolant léger. Cette enveloppe 2 comporte des ouvertures 10 à 12 positionnées de sorte à laisser passer les rayons lumineux émis par le module source de lumière 3 et aussi réfléchis par les réflecteurs de lumière 14,37,38 et/ou les zones de foyers réfléchissants 17. Cette enveloppe 2 comporte deux parties 8,9.

Une première partie 9 dans laquelle le module source de lumière 3 est agencé avec le cas échéant deux réflecteurs de lumière 37,38 comme représenté à la figure 4D. De manière non limitative, les deux réflecteurs de lumière 37,38 peuvent être appliqués sur la surface du fond de cette première partie par collage ou dépôt de sorte à être positionnés chacun en vis-à-vis avec la zone de foyers réfléchissants 17 correspondant. Cette partie comporte au moins une ouverture 12 agencée dans le fond de cette première partie de sorte à laisser passer les rayons lumineux émis par le module source de lumière 3 et aussi réfléchis par le réflecteur de lumière 14 et/ou la zone de foyers réfléchissants 17.

La deuxième partie 8 de cette enveloppe 2 est assimilable à un couvercle venant fermer ladite enveloppe 2. Cette deuxième partie 8 vient s'emboiter dans la première partie 9 par vissage, collage ou encore clippage. Cette deuxième partie 8 peut de manière non limitative comprendre le réflecteur 14 qui peut y être appliqué par collage ou dépôt de façon à être positionné en vis-à-vis avec la zone de foyers réfléchissants 17 correspondant. Cette deuxième partie 8 comporte au moins une ouverture 10,11 agencée de sorte à laisser passer les rayons lumineux émis par le module source de lumière 3 et aussi réfléchis par les réflecteurs de lumière 37,38 et/ou les zones de foyers réfléchissants 17, mais également pour qu'une partie de la surface réfléchissante 5 du réflecteur de lumière 14 qui n'est pas en vis-à-vis avec la surface de la face émettrice 16 du module source de lumière 3 puisse être visible de sorte à avoir une fonction de miroir de courtoisie, par exemple. On obtient ainsi au recto du dispositif d'éclairage 1 une surface émettrice 16 épousant le contour de ce miroir de courtoisie.

Les ouvertures 10 à 12 de cette enveloppe 2 correspondent par exemple à des parties transparentes ou translucides réalisées en des matériaux neutres optiquement sans effet notable sur la direction des rayons lumineux.

Cette enveloppe a par exemple les dimensions suivantes :
- une épaisseur entre 5 et 8 mm ;
- une longueur entre 130 et 170 mm, et
- une largeur entre 70 et 130 mm.

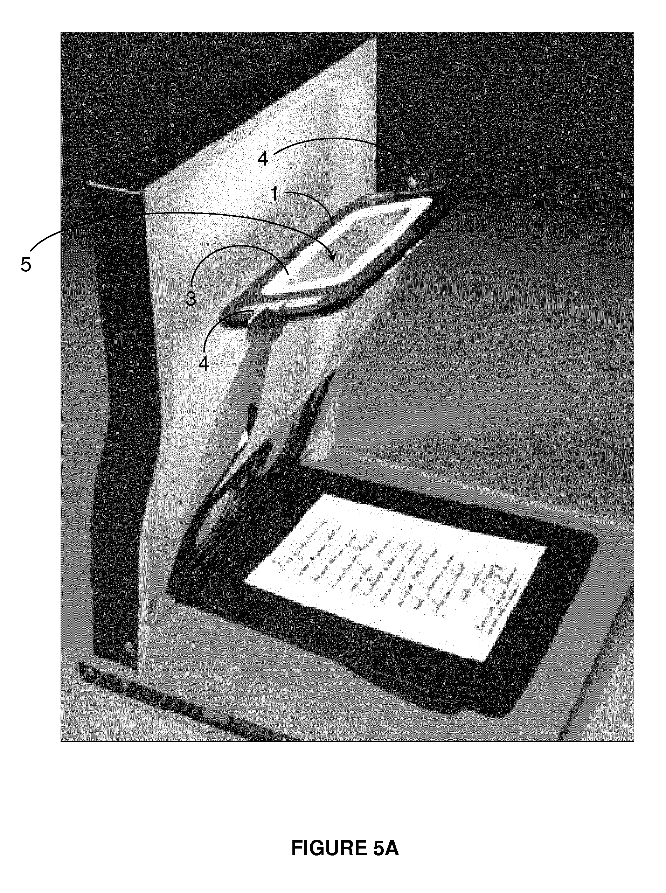

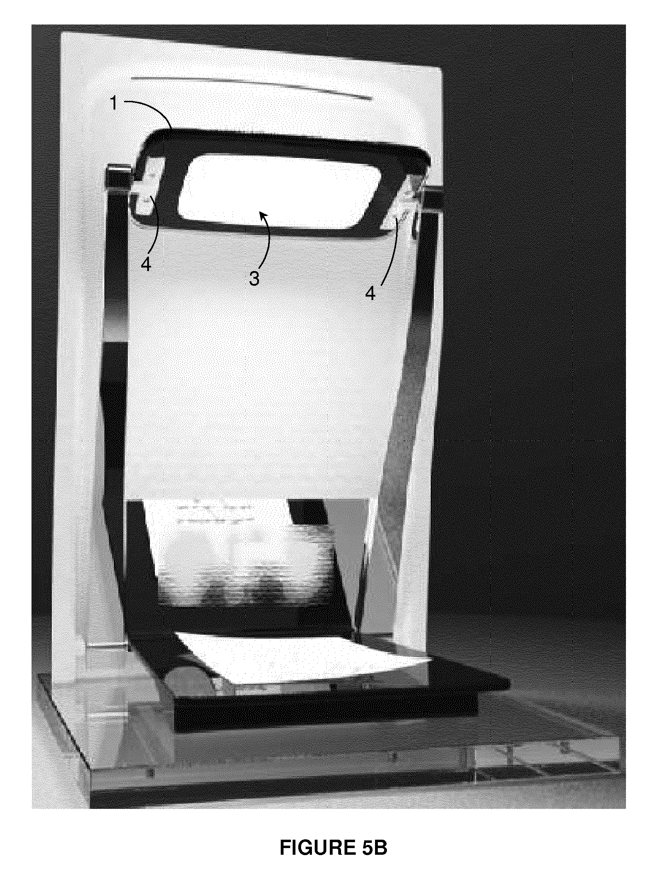

Ainsi que le représentent les figures 1, 2, 3, 5A et 5B, l'enveloppe 2 peut comporter des moyens de fixation 4 situés à ses extrémités. Ces moyens de fixations 4 permettent d'agencer le dispositif d'éclairage 1 dans l'habitacle d'un véhicule, à l'emplacement du pare-soleil ou encore adossé à un siège, comme illustré en figures 5A et 5B. Ces moyens de fixation sont agencés de manière à ce que le dispositif d'éclairage 1 puisse pivoter autour d'un axe passant par ces moyens de fixation 4. Par exemple, ils peuvent avoir une forme cylindrique destinée à être reçue dans une forme complémentaire d'un élément du véhicule, comme par exemple le dossier d'un siège ou encore des bras, éventuellement inclinables et/ou ajustables en hauteur.

Cette enveloppe 2 comporte également des évidements ou conduites permettant le passage des câbles 6,7 d'alimentation du dispositif d'éclairage 1.

Les figures 5A et 5B représentent le dispositif d'éclairage 1 en fonctionnement fixé sur un support par l'intermédiaire de deux bras avec en son verso une surface lumineuse 15, pouvant faire office de liseuse, et en son recto une surface lumineuse 16 entourant un miroir de courtoisie. Le dispositif est dans ces figures en position de liseuse et émet une lumière intense adaptée à cet usage. La surface lumineuse 16 peut être modulée selon différentes configurations des ouvertures 10 et 11, ou encore d'agencement de caches disposés au niveau de la surface émettrice 16 du module de source de lumière 3. Ainsi, le miroir de courtoisie peut par exemple être entouré que partiellement par la surface lumineuse 16.

Des effets de discontinuité de la surface lumineuse 16 ou encore des motifs formés par cette surface lumineuse 16 peuvent être obtenus grâce à ces différentes configurations.

Le dispositif d'éclairage, dans ces modes de réalisation de l'invention, a pour avantage d'être polyvalent et d'avoir une consommation faible d'énergie. De plus, il intègre différentes fonctions d'éclairage pour un encombrement minimal, notamment au regard de l'espace limité qu'offre l'habitacle d'un véhicule pour des dispositifs d'éclairage intérieur.

L'invention peut également être appliquée à tous dispositifs d'éclairage intérieur de véhicule mais également utilisé dans des espaces étroits ne disposant pas de suffisamment de place pour l'installation de dispositif d'éclairage intérieur conventionnel.

## Revendications

1. Dispositif d'éclairage intérieur (1) destiné à être utilisé dans un véhicule, comportant
- un module source de lumière (3) présentant une première face émettrice (16) et une deuxième face émettrice (15), et
- un réftecteur (14) de lumière avec une première surface réfléchissante (13) cette première surface réfléchissante étant disposée en regard d'une partie de la première face émettrice (16) ; le module source de lumière (3) comprenant un ou plusieurs éléments surfaciques émettant de la lumière, **caractérisé en ce que** ce ou ces éléments surfaciques sont une ou des diodes électroluminescentes organiques, et **en ce que** le réflecteur de lumière (14) comporte un côté verso avec ladite première surface réfléchissante (13) et un côté recto avec une deuxième surface réfléchissante (5).

2. Dispositif d'éclairage selon la revendication 1, **caractérisé en ce que** la première surface réfléchissante (13) du réflecteur de lumière (14) a des dimensions inférieures à celles de la première face émettrice (16) du module source de lumière (3) avec laquelle ladite première surface réfléchissante (13) est en regard.

3. Dispositif d'éclairage selon l'une des revendications précédentes, **caractérisé en ce que** le réflecteur de lumière (14) et le module source de lumière (3) sont agencés de sorte qu'au moins certains rayons provenant de cette première face émettrice (16) traversent le module source de lumière (3) en direction de la deuxième face (15) qui lui est opposée, après réflexion sur ladite première surface réfléchissante (13).

4. Dispositif d'éclairage selon l'une des revendications précédentes, **caractérisé en ce que** le module source de lumière (3) est surfacique et transparent.

5. Dispositif d'éclairage intérieur selon l'une des revendications 1 à 4, **caractérisé en ce que** le module source de lumière (3) est une diode électroluminescente organique.

6. Dispositif d'éclairage selon l'une des revendications 1 à 5, **caractérisé en ce que** le réflecteur de lumière (14) est agencé en regard de la face émettrice du module source de lumière (3) qui est la moins intense.

7. Dispositif d'éclairage selon l'une des revendications précédentes, **caractérisé en ce qu'**il comprend une enveloppe (2) comportant le module source de lumière (3) et le réflecteur de lumière (14).

8. Dispositif d'éclairage selon l'une la revendication 7, **caractérisé en ce que** ladite enveloppe (2) comprend des moyens de fixation (4) agencés de manière à ce que le dispositif d'éclairage (1) puisse pivoter autour d'un axe passant par ces moyens de fixation (4) permettant de présenter une face recto du dispositif selon une position et une face verso du dispositif selon une autre position.

9. Dispositif d'éclairage selon l'une des revendications précédentes, **caractérisé en ce que** la deuxième surface réfléchissante (5) est un miroir de courtoisie.

10. Dispositif d'éclairage selon l'une des revendications 1 à 9, **caractérisé en ce que** la deuxième face émettrice (15) est adaptée pour émettre une lumière permettant la lecture.

11. Dispositif d'éclairage intérieur (1) destiné à être utilisé dans un véhicule, comportant
- un module source de lumière (3) présentant une première face émettrice (16) et une deuxième face émettrice (15), et
- un réflecteur (14) de lumière avec une première surface réfléchissante (13), cette première surface réfléchissante étant disposée en regard d'une partie de la première face émettrice (16) ;
**caractérisé**
**en ce qu'**il comprend une diode électroluminescente organique, cette dernière comprenant :
- au moins une couche organique émettrice de lumière (20 ; 43) lorsqu'elle est soumise à une tension électrique, cette couche formant ledit module source de lumière (3),
- deux électrodes (18, 19; 24, 29) de part et d'autre de ladite couche organique émettrice de lumière, l'une des électrodes étant transparente et l'autre réfléchissante, l'électrode réfléchissante formant le réflecteur (14) ;
et **en ce que** le réflecteur de lumière (14) comporte un côté verso avec ladite première surface réfléchissante (13) et un côté recto avec une deuxième surface réfléchissante (5).

## Patentansprüche

1. Innenraumbeleuchtungsvorrichtung (1) zur Verwendung in einem Fahrzeug, mit:
- einem Lichtquellenmodul (3), das eine erste Emissionsfläche (16) und eine zweite Emissionsfläche (15) aufweist, und
- einem Lichtreflektor (14) mit einer ersten Reflexionsfläche (13), wobei diese erste Reflexionsfläche gegenüber einem Teil der ersten Emissionsfläche (16) angeordnet ist;
wobei das Lichtquellenmodul (3) ein oder mehrere lichtemittierende Flächenelemente umfasst,
**dadurch gekennzeichnet, dass** das bzw. die Flächenelemente eine oder mehrere organische Leuchtdioden sind, und dass der Lichtreflektor (14) eine Rückseite mit der ersten Reflexionsfläche (13) und eine Vorderseite mit einer zweiten Reflexionsfläche (5) aufweist.

2. Beleuchtungsvorrichtung nach Anspruch 1,
**dadurch gekennzeichnet, dass** die erste Reflexionsfläche (13) des Lichtreflektors (14) kleinere Abmessungen hat als die erste Emissionsfläche (16) des Lichtquellenmoduls (3), der die erste Reflexionsfläche (13) gegenüberliegt.

3. Beleuchtungsvorrichtung nach einem der vorhergehenden Ansprüche,
**dadurch gekennzeichnet, dass** der Lichtreflektor (14) und das Lichtquellenmodul (3) solchermaßen angeordnet sind, dass wenigstens einige von der ersten Emissionsfläche (16) stammende Strahlen nach Reflexion auf der ersten Reflexionsfläche (13) das Lichtquellenmodul (3) in Richtung der zweiten ihm gegenüberliegenden Emissionsfläche (15) durchqueren.

4. Beleuchtungsvorrichtung nach einem der vorhergehenden Ansprüche,
**dadurch gekennzeichnet, dass** das Lichtquellenmodul (3) flächig und lichtdurchlässig ist.

5. Innenraumbeleuchtungsvorrichtung nach einem der Ansprüche 1 bis 4,
**dadurch gekennzeichnet, dass** das Lichtquellenmodul (3) eine organische Leuchtdiode ist.

6. Beleuchtungsvorrichtung nach einem der Ansprüche 1 bis 5,
**dadurch gekennzeichnet, dass** der Lichtreflektor (14) gegenüber der Emissionsfläche des Lichtquellenmoduls (3) angeordnet ist, die am wenigsten lichtintensiv ist.

7. Beleuchtungsvorrichtung nach einem der vorhergehenden Ansprüche,
**dadurch gekennzeichnet, dass** sie ein das Lichtquellenmodul (3) und den Lichtreflektor (14) umfassendes Gehäuse (2) aufweist.

8. Beleuchtungsvorrichtung nach Anspruch 7,
**dadurch gekennzeichnet, dass** das Gehäuse (2) Befestigungsmittel (4) umfasst, die solchermaßen angeordnet sind, dass die Beleuchtungsvorrichtung (1) um eine durch die Befestigungsmittel (4) verlaufende Achse herum schwenken kann, wodurch eine Vorderseite der Vorrichtung in einer Position und eine Rückseite der Vorrichtung in einer anderen Position präsentiert werden kann.

9. Beleuchtungsvorrichtung nach einem der vorhergehenden Ansprüche,
**dadurch gekennzeichnet, dass** die zweite Reflexionsfläche (5) ein Kosmetikspiegel ist.

10. Beleuchtungsvorrichtung nach einem der Ansprüche 1 bis 9,
**dadurch gekennzeichnet, dass** die zweite Emissionsfläche (15) so ausgeführt ist, dass sie ein Leselicht emittiert.

11. Innenraumbeleuchtungsvorrichtung (1) zur Verwendung in einem Fahrzeug, mit:
- einem Lichtquellenmodul (3), das eine erste Emissionsfläche (16) und eine zweite Emissionsfläche (15) aufweist, und
- einem Lichtreflektor (14) mit einer ersten Reflexionsfläche (13), wobei diese erste Reflexionsfläche gegenüber einem Teil der ersten Emissionsfläche (16) angeordnet ist;
**dadurch gekennzeichnet, dass** sie eine organische Leuchtdiode umfasst, die
- wenigstens eine lichtemittierende organische Schicht (20; 43) aufweist, wenn sie einer elektrischen Spannung ausgesetzt ist, wobei die Schicht das Lichtquellenmodul (3) bildet,
- zwei Elektroden (18, 19; 24, 29) beidseits der lichtemittierenden organischen Schicht aufweist, wobei die eine Elektrode lichtdurchlässig und die andere reflektierend ist, wobei die reflektierende Elektrode den Reflektor (14) bildet;
und dass der Lichtreflektor (14) eine Rückseite mit der ersten Reflexionsfläche (13) und eine Vorderseite mit einer zweiten Reflexionsfläche (5) aufweist.

## Claims

1. Interior lighting device (1) which is designed to be used in a vehicle, comprising:
- a light source module (3) with a first emitter face (16) and a second emitter face (15); and
- a light reflector (14) with a first reflective surface (13), this first reflective surface being disposed opposite a part of the first emitter face (16);
the light source module (3) comprising one or a plurality of surface elements which emit light,
**characterised in that** this or these surface element(s) is/are one or more organic light-emitting diodes, and **in that** the light reflector (14) comprises a reverse side with the said first reflective surface (13), and a front side with a second reflective surface (5).

2. Lighting device according to claim 1, **characterised in that** the first reflective surface (13) of the light reflector (14) has dimensions smaller than those of the first emitter face (16) of the light source module (3) relative to which the said first reflective surface (13) is opposite.

3. Lighting device according to one of the preceding claims, **characterised in that** the light reflector (14) and the light source module (3) are arranged such that at least some rays obtained from this first emitter face (16) pass through the light source module (3) in the direction of the second face (15) which is opposite it, after reflection on the said first reflective surface (13).

4. Lighting device according to one of the preceding claims, **characterised in that** the light source module (3) is surface and transparent.

5. Interior lighting device according to one of claims 1 to 4, **characterised in that** the light source module (3) is an organic light-emitting diode.

6. Lighting device according to one of claims 1 to 5, **characterised in that** the light reflector (14) is arranged opposite the emitter face of the light source module (3) which is the least intense.

7. Lighting device according to one of the preceding claims, **characterised in that** it comprises an envelope (2) comprising the light source module (3) and the light reflector (14).

8. Lighting device according to claim 7, **characterised in that** the said envelope (2) comprises securing means (4) which are arranged such that the lighting device (1) can pivot around an axis which passes via these securing means (4), thus making it possible to present a front face of the device according to one position, and a rear face of the device according to another position.

9. Lighting device according to one of the preceding claims, **characterised in that** the second reflective surface (5) is a vanity mirror.

10. Lighting device according to one of claims 1 to 9, **characterised in that** the second emitter face (15) is designed to emit a light which permits reading.

11. Interior lighting device (1) which is designed to be used in a vehicle, comprising:
- a light source module (3) with a first emitter face (16) and a second emitter face (15); and
- a light reflector (14) with a first reflective surface (13), this first reflective surface being disposed opposite a part of the first emitter face (16);
**characterised in that** it comprises an organic light-emitting diode, the latter comprising:
- at least one organic layer (20; 43) which emits light when it is subjected to an electric voltage, this layer forming the said light source module (3);
- two electrodes (18, 19; 24, 29) on both sides of the said light-emitting organic layer, one of the electrodes being transparent and the other being reflective, the reflective electrode forming the reflector (14);
- and **in that** the light reflector (14) comprises a reverse side with the said first reflective surface (13), and a front side with a second reflective surface (5).
